Europäisches Patentamt

European Patent Office

Office européen des brevets

(11) Veröffentlichungsnummer: **0 208 891**
A2

## (12) EUROPÄISCHE PATENTANMELDUNG

(21) Anmeldenummer: 86107548.9

(22) Anmeldetag: 03.06.86

(51) Int. Cl.⁴: **B 23 Q 39/04**

(30) Priorität: 10.06.85 DE 3520732

(43) Veröffentlichungstag der Anmeldung: 21.01.87
Patentblatt 87/4

(84) Benannte Vertragsstaaten: DE FR GB IT

(71) Anmelder: **Patent-Treuhand-Gesellschaft für
elektrische Glühlampen mbH, Hellabrunner Strasse 1,
D-8000 München 90 (DE)**

(72) Erfinder: **Fetzer, Herbert, Dipl.-Ing., Ringstrasse 22,
D-7921 Hermatingen (DE)**

(74) Vertreter: **Strasse, Joachim, Dipl.-Ing. et al, Strasse und
Stoffregen European Patent Attorneys
Zweibrückenstrasse 17, D-8000 München 2 (DE)**

(54) **Montagemaschine.**

(57) Bei einer Montagemaschine mit einem getaktet angetriebenen Drehtisch zur Aufnahme mehrerer Werkstücke, die an zumindest teilweise über den Umfang eines feststehenden Maschinentisches angeordneten Substationen vorbeigeführt werden, welche eine Antriebsvorrichtung für eine oder mehrere an der Substation angeordnete Bearbeitungsvorrichtung(en) aufweisen, sind zumindest eine oder mehrere Substationen mit einem vom Takt des Drehtisches unabhängigen Schalttrieb versehen. Hierdurch kann insbesondere bei Übersetzer-Substationen eine Beschleunigung der Montage durch überlappende Takte von Maschine und Übersetzer erreicht werden. Die Substationen können unabhängig von der zentralen Maschine ausgetestet und in größerer Entfernung aufgestellt werden, ohne daß Funktionsbeeinträchtigungen infolge eines Spiels der Antriebsorgane auftreten. Der Antrieb einer Steuerwelle kann mittels einer von der Zentralmaschine angetriebenen Rollenkette erfolgen. Es ist aber auch jede andere Antriebsart, z.B. Motor denkbar, so daß der Schaltantrieb auch als eigenständige Vorrichtung betrieben werden kann.

## Montagemaschine

Die Erfindung betrifft eine Montagemaschine mit einem getaktet angetriebenen Drehtisch zur Aufnahme mehrerer Werkstücke, die an zumindest teilweise über den Umfang eines feststehenden Maschinentisches angeordneten Substationen vorbeigeführt werden, welche eine Antriebsvorrichtung für eine oder mehrere an der Substation angeordnete Bearbeitungsvorrichtung(en) aufweisen. Eine derartige Montagemaschine ist beispielsweise aus der deutschen Offenlegungsschrift Nr. 28 27 480 derselben Anmelderin bekannt. Der Taktantrieb des Drehtisches erfolgt schrittweise über ein Schaltkurvengetriebe, welches von einem Elektromotor angetrieben wird. Der Elektromotor treibt synchron über ein Winkelgetriebe eine im feststehenden Maschinentisch umlaufende Kette, die ihrerseits nach Bedarf an am Unfang des Maschinentisches angeordnete Bearbeitungsstationen eine Drehbewegung abgibt. Der Takt des Drehtisches wird über eine Außenverzahnung mittels Zahnrädern abgenommen und, gegebenenfalls über Kettentriebe, an Schaltteller übergeben, welche zur Betätigung von Geräten mit Übersetz- und Zubringerfunktionen dienen.

Aus der US-PS 3 754 316 ist eine Montagemaschine bekannt, bei welcher ein zentraler Antrieb gleichzeitig indexiert einen Drehtisch und über ein weiteres Getriebe eine umlaufende endlose Kette zum Antrieb von Bearbeitungsstationen antreibt. Von der umlaufenden Kette kann die Bewegung über Kettenräder abgenommen und an bis zu drei modular aufgebaute Betätigungsvorrichtungen pro Bearbeitungsvorrichtung abgegeben werden. Maßnahmen zur Taktsynchronisierung zwischen dem zentralen Drehtisch und den Bearbeitungsvorrichtungen sind dieser Schrift nicht zu entnehmen.

Bei der aus der deutschen Offenlegungsschrift 28 27 480 bekannten Montagemaschine ist der Takt der Substationen an den Takt des zentralen Drehtisches gekoppelt; insbesondere bei größeren Längen der Kette zwischen dem in die Außenverzahnung eingreifenden Ritzel und der Substation ist diese Kopplung jedoch nicht starr, sondern weist ein mit wachsender Kettenentfernung größer werdendes Spiel auf. Bei Substationen, welche Übersetzerfunktionen erfüllen sollen, also die getaktete Übergabe bzw. Entgegennahme von Werkstücken oder Werkstoffen, führt dieses Spiel dazu, daß zusätzliche Vorkehrungen zur Ausschaltung des Spieles getroffen werden müssen. Hierzu können beispielsweise zusätzliche Justiervorrichtungen dienen, welche bei dem jeweiligen Maschinenschaltschritt betätigt und nachfolgend arretiert werden. Hierdurch verkürzt sich jedoch in erheblichem Umfang der dann noch für die übersetzende Substation verfügbare Zeit, da zunächst in die Justierposition gefahren werden muß, dann eine Verriegelung erfolgt, bevor der Übersetzungsvorgang beginnen kann, und nachfolgend diese Arretierung wieder gelöst werden muß. Außerdem sind für die Bereitstellung dieser Funktionen zusätzliche Vorrichtungen erforderlich, welche Kosten verursachen und potentielle Störquellen darstellen können.

Zwar erfolgt durch die Abnahme des Taktes des Drehtisches an dessen Außenverzahnung bei der bekannten Montagemaschine eine Synchronisation des Drehtisches mit den Substationen; andererseits sind infolgedessen die Substationen auch nur zusammen mit der zentralen Maschine verwendbar. Dies hat jedoch zur Folge, daß eine Erprobung von Substationen immer nur zusammen mit der Zentralmaschine und deren getaktet angetriebenem Drehtisch erfolgen kann; insbesondere bei größeren Montagevorrichtungen führt dies dazu, daß zunächst die kostenaufwendige Zentralmaschine angeschafft werden und während der gesamten Versuchsphase der Substationen zur Verfügung stehen muß. Die Zentralmaschine stellt jedoch als Investition einen erheblichen Kostenfaktor dar. Es wäre wünschenswert, diese Investition erst tätigen zu müssen, wenn bereits die Substationen fertig ausgetestet und funktionsfähig sind, damit nur noch ein Zusammenbau der gesamten Montagevorrichtung erfolgen und eine Produktion beginnen kann.

Die Erfindung steht daher unter der Aufgabe, die bekannte Montagemaschine weiter zu entwickeln, sodaß die dort bestehenden Einschränkungen wegfallen.

Die Aufgabe wird dadurch gelöst, daß zumindest eine (oder mehrere) Substation einen vom Takt des Drehtisches unabhängigen Schalttrieb aufweist. Hierdurch wird auf überraschend einfache Weise erreicht, daß eine derartige Substation selbstständig aufgebaut und ausgetestet werden kann, da die erforderliche Schaltfunktion bei dieser Substation bereitgestellt wird. Weiterhin ist hierdurch eine einfache Anpassung einer Substation an geänderte Anforderungen möglich, da hierfür nur der an der Substation vorgesehene Schalttrieb umgeändert oder ausgewechselt werden muß.

Bei einer vorteilhaften Ausführungsform der Erfindung ist vorgesehen, daß der unabhängige Schalttrieb von der Antriebsvorrichtung für die Bearbeitungsvorrichtung der Substation angetrieben wird. Dies kann beispielsweise durch eine umlaufende Endloskette geschehen, die aufgrund ihres ständigen Umlaufes eine erheblich geringere Belastung aufweist als eine getaktet geschaltete Kette. Diese kontinuierliche Antriebsbewegung muß bei der Substation nur noch in eine Schaltbewegung umgewandelt wer-

den und dies geschieht gemäß einer weiteren vorteilhaften Ausführungsform der Erfindung dadurch, daß der unabhängige Schalttrieb eine angetriebene Steuerwelle aufweist, welche über ein Zwischengetriebe ein Schaltgetriebe treibt, welches einen Schaltteller bewegt.

Gemäß einer weiteren vorteilhaften Ausführungsform der Erfindung weist das Schaltgetriebe eine mit dem Zwischengetriebe verbundene Hauptwelle auf, auf welcher eine Schaltkurve angebracht ist, in welche ein Rollenstern eingreift, an dem der Schaltteller befestigt ist. Hierdurch wird in vorteilhafter Weise eine höchsten Genauigkeitsanforderungen genügende Spielreduzierung des Schalttellers bewirkt, da ein ohnehin nur geringes Spiel der kontinuierlichen Antriebsvorrichtung durch die Anordnung von Schaltkurve und Rollenstern erheblich reduziert wird.

Durchragt gemäß einer weiteren vorteilhaften Ausführungsform der Erfindung die Steuerwelle den Rollenstern und den Schaltteller und ist koaxial zu dem Rollenstern und dem Schaltteller angeordnet, so ergibt sich eine besonders kompakte Bauweise. Eine weitere erhebliche Verbesserung gegenüber dem Stand der Technik ist gemäß einer anderen bevorzugten Ausführungsform der Erfindung erreichbar, wenn ein teilweise die Steuerwelle koaxial umgebender feststehender Montageflansch vorgesehen ist, welcher innerhalb des Schalttellers angeordnet ist. Dann können nämlich auf dem feststehenden Montageflansch weitere Bearbeitungsvorrichtungen angebracht werden, um welche außen der Schaltteller getaktet gedreht wird. Diese Bauweise ist besonders geeignet, um zwischen zwei größeren Montageeinheiten Übersetzeraufgaben zu erfüllen, also Werkstücke und/oder Werkstoffe anzunehmen und weiterzugeben, jedoch ist die Funktion selbstverständlich nicht auf Übersetzervorgänge beschränkt.

Eine besonders kompakte und spielarme Bauweise wird gemäß einer weiteren vorteilhaften Ausführungsform der Erfindung dadurch erreicht, daß das Zwischengetriebe ein eingangsseitig an der Steuerwelle angebrachtes Kegelrad aufweist, welches mit einem weiteren Kegelrad kämmt, das auf einer Ritzelwelle angebracht ist, deren Drehbewegung ein Stirnradvorgelege treibt, dessen Abtriebseite die Hauptwelle der Schaltkurve antreibt.

Für diese Bauweise ist vorteilhafterweise bei einer weiteren bevorzugten Ausführungsform der Erfindung die Steuerwelle senkrecht zu der Hauptwelle und senkrecht zu der zur Hauptwelle parallel angeordneten Ritzelwelle angeordnet.

Eine einfache Montage und Demontage der erfindungsgemäßen Vorrichtung, verbunden mit einer sehr präzisen Lagerung der sich drehenden Teile, läßt sich gemäß einer weiteren vorteilhaften Ausführungsform der Erfindung dadurch bewerkstelligen, daß der unabhängige Schalttrieb ein Gehäuse aufweist, in welchem die Steuerwelle eingangsseitig drehbar gelagert aufgenommen ist, und daß im Gehäuse der Montageflansch befestigt und mit einer zentralen Ausnehmung zur Aufnahme der Steuerwelle versehen ist, welche abtriebsseitig in der Ausnehmung drehbar gelagert ist.

Eine präzise Lagerung wird weiterhin gemäß einer weiteren vorteilhaften Ausführungsform der Erfindung durch eine besondere Ausgestaltung des Montageflansches sichergestellt, welcher an seinem Außenumfang Lagervorrichtungen zur drehbaren Lagerung des Rollensterns und/oder des Schalttellers aufweist. Es ist darüberhinaus gemäß einer weiteren vorteilhaften Ausführungsform der Erfindung für die Präzision der Lagerung des Schalttellers förderlich, wenn der Schaltteller über Lagervor-

richtungen sich sowohl radial nach innen gegen den Montageflansch als auch nach außen gegen das Gehäuse abstützend drehbar gelagert ist.

Bei einer weiteren vorteilhaften Ausführungsform der Erfindung ist vorgesehen, daß die Steuerwelle abtriebsseitig mit einer Vorrichtung zum Anschluß von Bearbeitungsstationen versehen ist. Damit kann zentral in dem feststehenden Montageflansch eine kontinuierliche Bewegung abgenommen und an die Bearbeitungsstation oder auch mehrere modular auf einer Substation angeordnete Bearbeitungsstationen weitergegeben werden.

Die Erfindung wird nachstehend anhand zeichnerisch dargestellter Ausführungsbeispiele näher erläutert, aus welchen weitere Vorteile und Merkmale hervorgehen.

Es zeigen:

Fig. 1        eine Montagemaschine mit einem zentralen Drehtisch und drei Substationen sowie zwei auf dem feststehenden Maschinentisch angebrachten reinen Bearbeitungsstationen;

Fig. 2        eine Schnittansicht einer Substation gemäß der Erfindung;

Fig. 3a u. 3b eine detailliertere Schnittansicht der in Figur 2 dargestellten Vorrichtung; und

Fig. 4        ein Taktdiagramm zur Erläuterung der nach dem Stand der Technik und gemäß der Erfindung vorliegenden Taktzeiten von zentraler Maschine und Übersetzer-Substation.

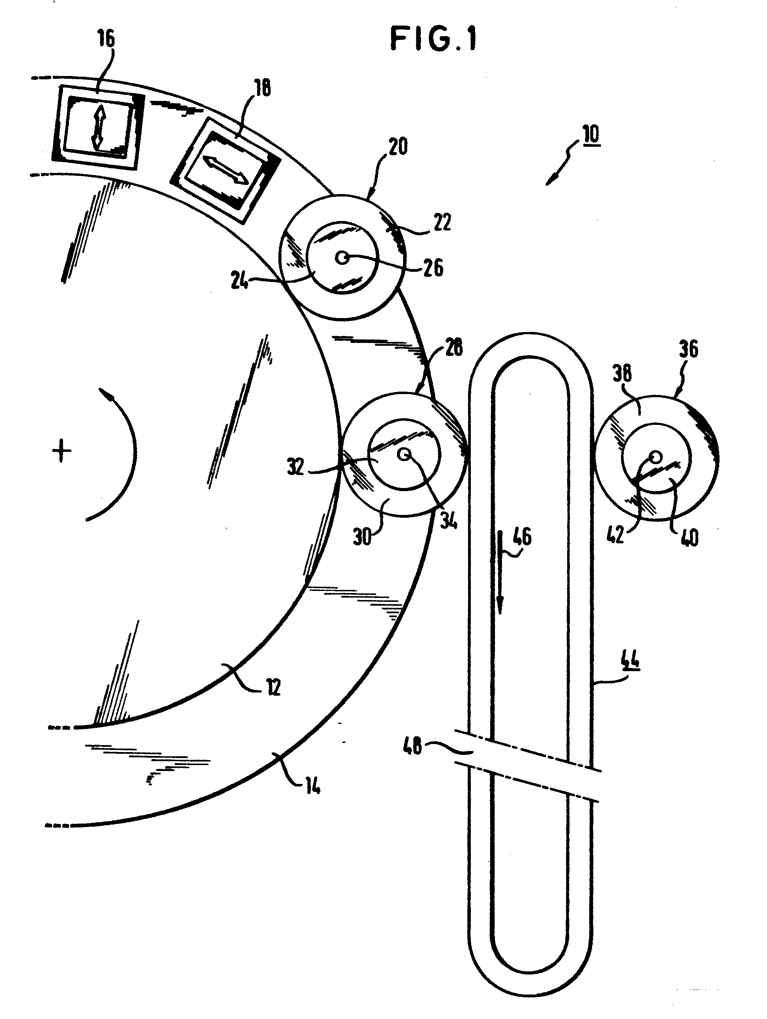

In Figur 1 ist eine Montagemaschine 10 mit einem um eine zentrale Achse drehbaren Drehtisch 12 dargestellt, welcher auf einem feststehenden Maschinentisch 14 angeordnet ist. Auf dem Maschinentisch sind zwei Bearbeitungsstationen 16, 18 angeordnet, deren Bearbeitungsrichtung beispielhaft durch Pfeile dargestellt ist, und zwar durch einen radialen Pfeil bei der Bearbeitungsstation 16 und einen tangentialen Pfeil bei der Bearbeitungsstation 18. Selbstverständlich sind auch andere Bearbeitungsrichtungen, beispielsweise vertikal, sowie weitere Bearbeitungsvorgänge möglich.

Eine erste Substation 20 gemäß der Erfindung ist auf dem Maschinentisch 14 angeordnet und weist einen Schaltteller 22 und einen feststehenden Montageflansch 24 auf, in dessen Zentrum eine Abtriebsachse 26 angeordnet ist. Zwei weitere Substationen 28, 36 sind für Übersetzerfunktionen bereitgestellt. Substation 28 ist ebenfalls auf dem feststehenden Maschinentisch 14 angeordnet und weist wie die voranstehend beschriebene Substation 20 einen Schaltteller 30, einen feststehenden Montageflansch 32 und eine zentrale Abtriebsachse 34 auf. Von der Substation 28 können Werkstücke an eine Fördervorrichtung 44 übergeben werden, welche endlos in Richtung des Pfeiles 46 umläuft und bei welcher beispielsweise in einer Zone 48 weitere Bearbeitungsvorgänge stattfinden können, beispielsweise eine Temperaturbehandlung.

Von der Fördervorrichtung 44 werden Werkstücke mittels einer weiter Substation 36 abgenommen, welche einen Schaltteller 38 und analog den bereits beschriebenen Substationen einen feststehenden Montageflansch 40 mit darin angeordneter Abtriebsachse 42 aufweist.

Bei der dargestellten Montagemaschine 10 können beispielsweise mittels der Substation 20 Werkstücke übergeben werden, von auf dem Drehtisch angebrachten Vorrichtungen ergriffen und an den Bearbeitungsstationen 18, 16 in dieser Reihenfolge vorbeigeführt werden, wobei selbstverständlich über den Umfang des feststehenden Maschinentisches 14 noch weitere Bearbeitungsstationen vorhanden sein können, und schließlich werden etwa am Ende eines Umlaufes des Drehtisches 12 die bearbeiteten Werkstücke von der Substation 28 abgenommen und an die nachgeordnete Fördervorrichtung 44 übergeben, von welcher die Werkstücke nach einem weiteren Bearbeitungsvorgang wiederum von der Substation 36 abgenommen und gegebenenfalls weitergegeben werden.

Es wird besonders darauf aufmerksam gemacht, daß selbst bei von der zentralen Maschine 12, 14 weit entfernter Substation 36, wie in Figur 1 dargestellt, auf äußerst präzise Weise Übersetzerfunktionen wahrgenommen werden können. Nach dem Stand der Technik wären für diesen Fall infolge des aus der beträchtlichen Entfernung resultierenden großen Antriebsspieles aufwendige Justier- und Arretiermaßnahmen erforderlich, hierauf kann gemäß der Erfindung verzichtet werden.

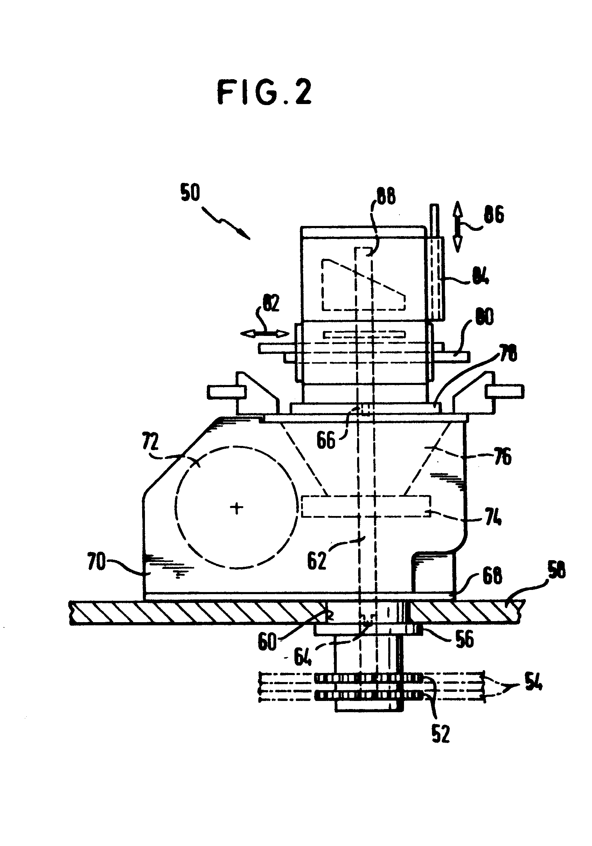

Als Beispiel für die in Figur 1 schematisch dargestellten Substationen 20, 28 und 36 ist in Figur 2 eine Substation 50 mit mehr Einzelheiten dargestellt. Von einer mit dem zentralen Antrieb des Drehtisches 12 verbundenen Kette 54, von der nur ein Abschnitt in Figur 2 dargestellt ist, wird über ein Ritzel 52 eine Drehbewegung auf das Antriebsende 64 einer zentralen Steuerwelle 62 gegeben, welche eine Öffnung 60 im Maschinentisch 58 durchragt. Das Ritzel 52 ist auf geeignete Weise drehbar über einen Flansch 56 an der Unterseite des Maschinentisches 58 festgelegt. Die Substation weist ein beispielsweise aus Grauguß, Aluminiumguß oder Stahl bestehendes Gehäuse 70 mit einer Bodenplatte 68 auf.

Von einer Schaltkurve 72, in die nicht dargestellte Rollen eines Rollensternes 74 eingreifen, wird über den Rollenstern eine Schaltbewegung auf einen am Rollenstern 74 befestigten Schaltteller 76 übertragen. Im Zentrum des oberen Abschnittes des Schalttellers 76 ist ein feststehender Montageflansch 78 vorgesehen, welcher von dem Abtriebsende 66 der Steuerwelle 62 zentral durchragt wird. Das Abtriebsende 66 ist mit einer weiteren Achse 88 zum Antrieb von Bearbeitungsstationen 80, 84 verbunden, welche nur schematisch dargestellt sind. Hierbei soll der Pfeil 82 eine horizontale Bewegung der Bearbeitungsstation 80 andeuten und der Pfeil 86 eine vertikale Bearbeitungsrichtung der Bearbeitungsstation 84. Die Bearbeitungsstationen 80, 84 sind modular aufeinander sitzend aufgebaut, selbstverständlich kann deren Reihenfolge vertauscht sein und es können sich auch weitere Bearbeitungsvorgänge mit geeigneten Bearbeitungsstationen hieran anschließen.

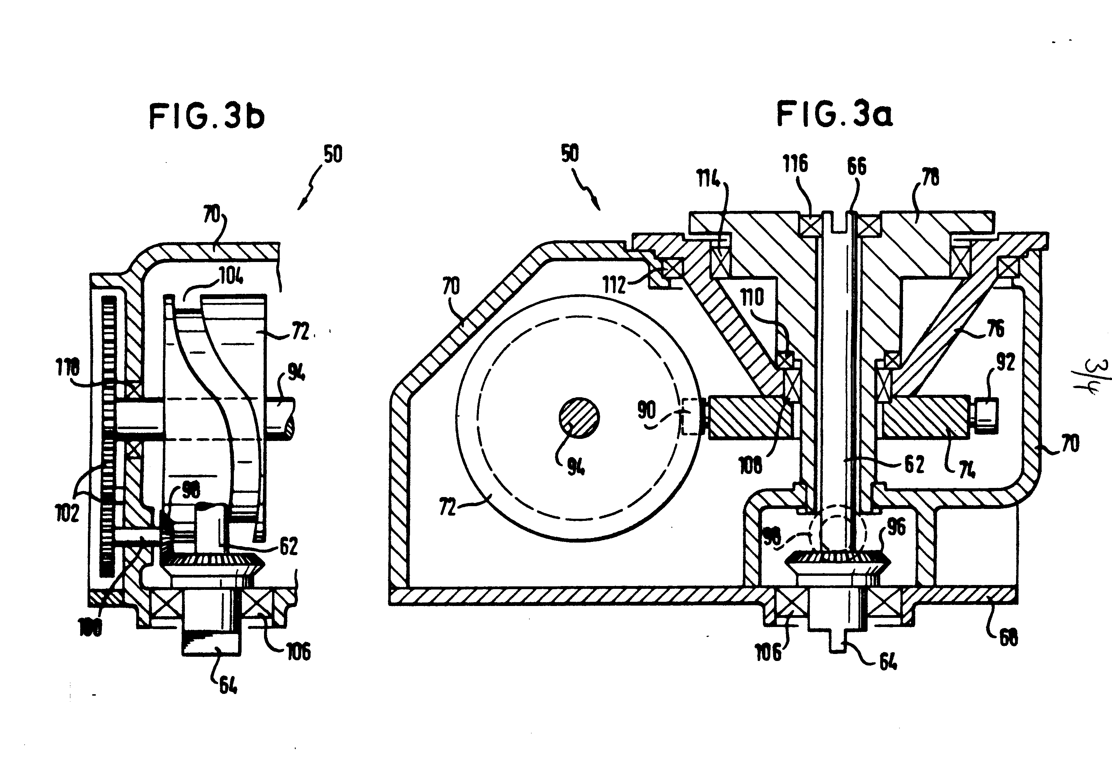

Aus den Figuren 3a und 3b wird der genaue Aufbau einer erfindungsgemäßen Substation 50 deutlich. Das Gehäuse 70 wird nach unten durch die Bodenplatte 68 abgeschlossen, in welcher ein Lager 106 zur eingangsseitigen Lagerung des Antriebsendes 64 der Steuerwelle 62 vorgesehen ist. Steuerwelle 62 verläuft in einer Ausnehmung des Montageflansches 78 und tritt mit ihrem Abtriebsende 66 aus dem Montageflansch aus. Die Drehbewegung der Steuerwelle 62 wird über ein auf der Steuerwelle antriebsseitig angebrachtes Kegelrad 96 auf ein Ritzel 98, eine Ritzelwelle 100 und ein Vorgelege 102 auf eine Hauptwelle 94 übertragen, an welcher die Schaltkurve 72 befestigt ist. In die gemäß den jeweiligen Schaltanforderungen ausgeformte Kurvenform 104 greift eine Rolle 90 des Rollensterns 74 ein. Die Zahl der insgesamt am Rollenstern 74 angebrachten Rollen 90, 92 richtet sich nach den jeweiligen Schalterfordernissen und der Schaltkurve 72.

Am Rollenstern 74 ist ein trichterförmig ausgebildeter Schaltteller 76 befestigt, der eine getaktete Drehbewegung ausführt, welche durch die in der Schaltkurve 72, 104 geführte Bewegung des Rollensterns 74 bedingt ist. Der Rollenstern 74 und der Schaltteller 76 stützen sich radial nach innen gegen den feststehenden Montageflansch über Lager 108, 110 sowie im oberen Teil über Lager 114 ab und sind nach außen, gegenüber dem Gehäuse 70, durch ein Lager 112 zwischen dem Gehäuse und dem Schaltteller 76 geführt. Das abtriebsseitige Ende 66 der Steuerwelle 62 ist drehbar in einem Lager 116 gelagert, welches in der zentralen Ausnehmung des Montageflansches 78 angebracht ist.

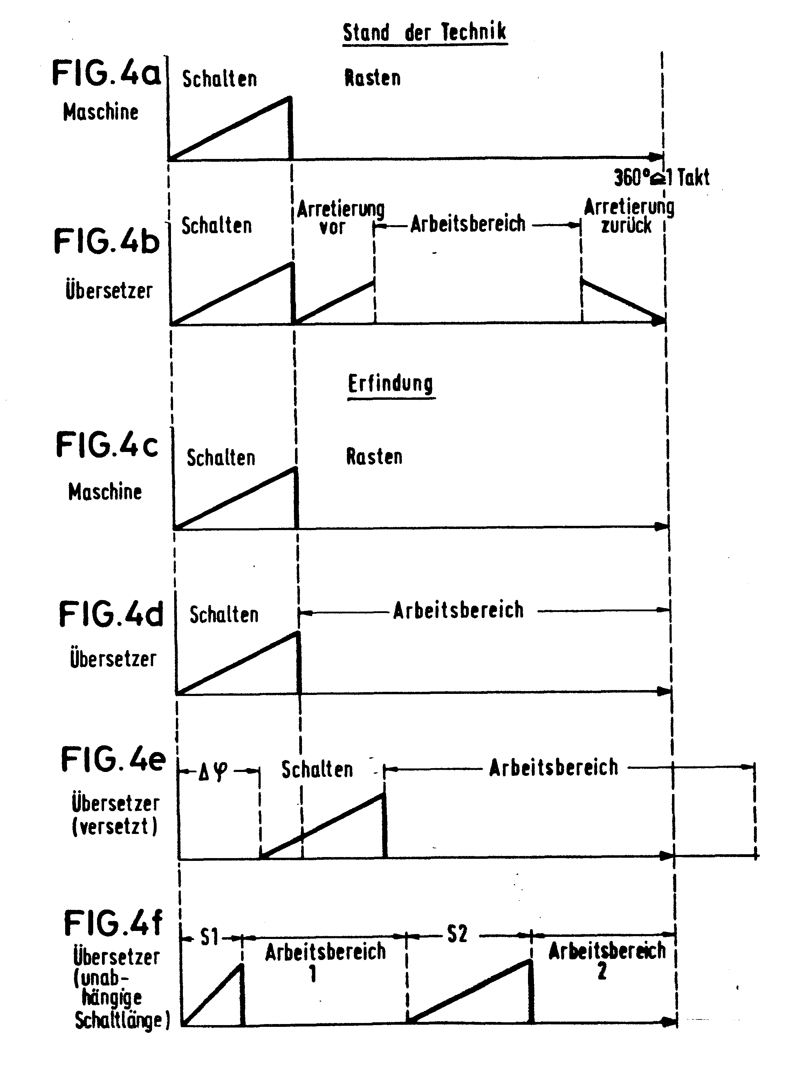

Figur 4 erläutert die Arbeitsweise der erfindungsgemäßen Vorrichtung und die hiermit erzielbaren erheblichen Vorteile. In Figur 4a ist ein Arbeitstakt einer Maschine nach dem Stand der Technik angegeben, bei welcher eine Umdrehung, also 360°, der Steuerwelle einen Takt darstellt. Auf einen Schaltbereich der Maschine folgt der Rastbereich, und es wird aus Figur 4b ersichtlich, daß die Übersetzer-Substation nach dem Schalten der Maschine noch eine Arretierung durchlaufen muß, ehe der Arbeitsbereich des Übersetzers beginnt. Diese Arretierung muß rechtzeitig bis zum Ende des Arbeitstaktes wieder zurückgenommen werden, bevor ein neuer Takt beginnen kann. Von dem prinzipiell im Rastbereich der Maschine (Figur 4a) zur Verfügung stehenden Arbeitsbereich wird also gemäß Figur 4b nur ein eingeschränkter Arbeitsbereich ausgenutzt, von dem die Arretierzeit und die Endarretierzeit abgehen. Figur 4 ist nur qualitativ zu verstehen, es wird darauf hingewiesen, daß bei hohen Taktraten von beispielsweise 6.000 pro Stunde entsprechend der Dauer eines Taktes von 600 Millisekunden der effektiv für den Übersetzer zur Verfügung stehende Arbeitsbereich beispielsweise höchstens 50% des durch die Maschine vorgegebenen Rastbereiches betragen kann.

Die Arbeitsweise der erfindungsgemäßen Maschine wird aus den Figuren 4c bis 4f deutlich. Wiederum ist im selben Maßstab bei Figur 4c der Schalt- und der Rastbereich der Maschine dargestellt. Gemäß der Erfindung steht nunmehr, vergleiche Figur 4d, für den Übersetzer der gesamte Rastbereich der Maschine als Arbeitsbereich zur Verfügung.

Gemäß der vorliegenden Erfindung sind jedoch noch weitere Vorteile erzielbar, welche in den Figuren 4e und 4f angegeben sind. Infolge der erfindungsgemäßen Entkopplung der Schaltfunktionen der zentralen Maschine und des Übersetzers kann eine versetzte Arbeitsweise des Übersetzers gegenüber der zentralen Maschine erreicht werden, welche in Figur 4e gezeigt ist. So kann ein Ruhebereich am Anfang des Taktes bereitgestellt werden, an welchen sich ein Schaltbereich anschließt, der sich hieran anschließende Arbeitsbereich des Übersetzers ist genauso lang wie bei der in Fig. 4d dargestellten Ausführungsform, der Arbeitsbereich des Übersetzers erstreckt sich damit um den gleichen Betrag in den nächsten Arbeitstakt hinein. Eine derartige Betriebsweise ist bei Übergabevorgängen eines Übersetzers besonders vorteilhaft, da nicht unbedingt die Raststellung der Hauptmaschine abgewartet werden muß, bis der Übersetzer arbeitet, sondern eine derartige Überlappung um einen Bereich den Übersetzervorgang beschleunigen kann, da nur abgewartet werden muß, daß der gegenseitige Störbereich von Maschine und Übersetzer getrennt wird. So kann beispielsweise schon eine Empfangszange des Übersetzers einzuschwenken beginnen, bevor die Übergabezange der Maschine vollständig eingerastet ist.

Weitere Varianten gegenüber den Darstellungen in Fig. 4d und 4e sind dadurch möglich, daß die Schaltzeit länger oder kürzer als der Rastbereich sein kann. So kann das Schalten über einen flachen Anstieg länger erfolgen oder später einsetzen und dafür steiler ansteigen.

Auch ist es gemäß der Erfindung möglich, wie in Figur 4f dargestellt, mehrere Funktionen des Übersetzers während eines Maschinentaktes ablaufen zu lassen. Demgemäß kann ein erster Schaltbereich S1 bereits beendet sein, bevor der Schaltbereich der Maschine beendet ist, und ein Arbeitsbereich 1 des Übersetzers kann beginnen und sich in den Rastbereich der Maschine erstrecken. Innerhalb des gemäß der Erfindung verbleibenden großen Arbeitsbereiches können sich im selben Takt dann noch ein weiterer Schaltbereich S2 des Übersetzers und ein Arbeitsbereich 2 anschließen. Auf diese Weise kann eine schnellere Arbeitsweise des Übersetzers verbunden mit einer universellen Anpaßbarkeit an Anfordernisse der Maschine erreicht werden.

- 1 -

M o n t a g e m a s c h i n e

P a t e n t a n s p r ü c h e

1. Montagemaschine mit einem getaktet angetriebenen Drehtisch zur Aufnahme mehrerer Werkstücke, die an zumindest teilweise über den Umfang eines feststehenden Maschinentisches angeordneten Substationen vorbeigeführt werden, welche eine Antriebsvorrichtung für eine oder mehrere an den Substationen angeordnete Bearbeitungsvorrichtung(en) aufweisen, d a d u r c h  g e k e n n z e i c h n e t, daß zumindest eine Substation (50) einen vom Takt des Drehtisches (12) unabhängigen Schalttrieb (72, 74, 76) aufweist.

2. Montagemaschine gemäß Anspruch 1, d a d u r c h  g e k e n n z e i c h n e t, daß der unabhängige Schalttrieb (72, 74, 76) von der Antriebsvorrichtung für die Bearbeitungsvorrichtung der Substation (50) angetrieben wird.

3. Montagemaschine gemäß Anspruch 1 oder 2, d a d u r c h  g e k e n n z e i c h n e t, daß der unabhängige Schalttrieb (72, 74, 76) eine angetriebene Steuerwelle (62) aufweist, welche über ein Zwischengetriebe (96, 98, 100, 102) ein Schaltgetriebe (72, 74) treibt, das einen Schaltteller (76) bewegt.

4. Montagemaschine gemäß Anspruch 3,
d a d u r c h   g e k e n n z e i c h n e t,
daß das Schaltgetriebe eine mit dem Zwischengetriebe verbundene Hauptwelle (94) aufweist, auf welcher eine Schaltkurve (72) angebracht ist, in welche ein Rollenstern (74) eingreift, an dem der Schaltteller (76) befestigt ist.

5. Montagemaschine gemäß Anspruch 4,
d a d u r c h   g e k e n n z e i c h n e t,
daß die Steuerwelle (62) den Rollenstern (74) und den Schaltteller (76) durchragt und koaxial zu dem Rollenstern (74) und dem Schaltteller (76) angeordnet ist.

6. Montagemaschine gemäß Anspruch 5,
d a d u r c h   g e k e n n z e i c h n e t,
daß ein teilweise die Steuerwelle (62) koaxial umgebender feststehender Montageflansch (78) vorgesehen ist, welcher innerhalb des Schalttellers (76) angeordnet ist.

7. Montagemaschine gemäß Anspruch 3 oder einem der folgenden Ansprüche,
d a d u r c h   g e k e n n z e i c h n e t,
daß das Zwischengetriebe ein eingangsseitig an der Steuerwelle (62) angebrachtes Kegelrad (96) aufweist, welches mit einem weiteren Kegelrad (98) kämmt, das auf einer Ritzelwelle (100) angebracht ist, deren Drehbewegung ein Stirnradvorgelege (102) treibt, dessen Abtriebsseite die Hauptwelle (94) der Schaltkurve (72) antreibt.

8. Montagemaschine gemäß Anspruch 7,
d a d u r c h   g e k e n n z e i c h n e t,
daß die Steuerwelle (62) senkrecht zu der Hauptwelle (94)  und der zur Hauptwelle (94) parallel
angeordneten Ritzelwelle (100) angeordnet ist.

9. Montagemaschine gemäß Anspruch 1 oder einem der
folgenden Ansprüche,
d a d u r c h   g e k e n n z e i c h n e t,
daß der unabhängige Schalttrieb (72, 74, 76) ein
Gehäuse (70) aufweist,  in welchem die Steuerwelle
(62) eingangsseitig drehbar gelagert aufgenommen
ist,  und daß im Gehäuse (70) der Montageflansch
(78) befestigt und mit einer zentralen Ausnehmung
zur Aufnahme der Steuerwelle (62) versehen ist,
welche abtriebsseitig in der Ausnehmung drehbar gelagert ist.

10. Montagemaschine gemäß Anspruch 9,
d a d u r c h   g e k e n n z e i c h n e t,
daß der Montageflansch (78) an seinem Außenumfang
Lagervorrichtungen zur drehbaren Lagerung des Rollensterns (74) und/oder des Schalttellers (76) aufweist.

11. Montagemaschine gemäß Anspruch 9 oder 10,
d a d u r c h   g e k e n n z e i c h n e t,
daß der Schaltteller (76) über Lagervorrichtungen
sich sowohl radial nach innen gegen den Montageflansch (78) als auch nach außen gegen das Gehäuse
(70) abstützend drehbar gelagert ist.

12. Montagemaschine gemäß Anspruch 3 oder einem der
folgenden Ansprüche,
d a d u r c h   g e k e n n z e i c h n e t,

daß die Steuerwelle (62) abtriebsseitig (66) mit einer Vorrichtung zum Anschluß von Bearbeitungsstationen (80) versehen ist.

5 13. Montagemaschine gemäß Anspruch 1,
d a d u r c h   g e k e n n z e i c h n e t,
daß die Substation(en) (50) einen eigenständigen Antrieb für den unabhängigen Schalttrieb (72,74,76) aufweist.

FIG.1

FIG.2

FIG.3a

FIG.3b

4/4      0208891

## Stand der Technik

**FIG.4a** Maschine — Schalten | Rasten

360° ≙ 1 Takt

**FIG.4b** Übersetzer — Schalten | Arretierung vor | Arbeitsbereich | Arretierung zurück

## Erfindung

**FIG.4c** Maschine — Schalten | Rasten

**FIG.4d** Übersetzer — Schalten | Arbeitsbereich

**FIG.4e** Übersetzer (versetzt) — $\Delta\varphi$ | Schalten | Arbeitsbereich

**FIG.4f** Übersetzer (unabhängige Schaltlänge) — S1 | Arbeitsbereich 1 | S2 | Arbeitsbereich 2